# EUROPÄISCHE PATENTSCHRIFT

(11) **EP 1 154 556 B1**
(45) Veröffentlichungstag und Bekanntmachung des Hinweises auf die Patenterteilung: **18.09.2013**
(21) Anmeldenummer: 01110415.5
(22) Anmeldetag: 27.04.2001
(51) Int. Cl.: H02P 7/00

(54) **Schaltungsanordnung zum Betrieb eines Motors**
Circuit for operating a motor
Circuit pour l'operation d'un moteur

(30) Priorität: 11.05.2000 DE 10022924
(43) Veröffentlichungstag der Anmeldung: 14.11.2001
(73) Patentinhaber: Bayerische Motoren Werke Aktiengesellschaft, 80809 München (DE)
(72) Erfinder: Wagner, Armin, 85757 Karlsfeld (DE); Zeller, Armin, 80992 München (DE)

(56) Entgegenhaltungen:
- EP-A- 0 689 986
- DE-A- 3 909 042
- DE-A- 4 444 810
- DE-A- 19 630 036
- DE-A1- 19 529 644
- US-A- 5 786 679

## Beschreibung

Die Erfindung betrifft eine Schaltungsanordnung zum Betrieb eines Motors gemäß dem Oberbegriff des Anspruchs 1.

Es ist bekannt, das Drehmoment eines Motors zu steuern. Bei einem Ausführungsbeispiel kann durch eine solche Drehmomentübertragung ein sog. haptisches Feed-back für einen Bediener eines Drehknopfes, welcher mit dem Motor gekoppelt ist, erzeugen. Die Kräfte für das haptische Feed-back werden hierbei mittels eines permanent-erregten Gleichstrommotors erzeugt, wobei das erzeugte Drehmoment direkt proportional zu dem durch den Anker fließenden Strom ist.

Ferner ist es bekannt, zur Ansteuerung eines Motors eine H-Brückenschaltung zu verwenden, bei der jeweils ein Schalttransistor im Stromzweig als Konstantstromquelle wirksam ist. Mit einem zweiten Transistor im Stromzweig wird beispielsweise mittels einer Pulsweitenansteuerung der Strom im Bereich von 0 bis 100 % gesteuert. Dabei liegt die Frequenz für die Pulsweitenansteuerung möglichst oberhalb der Hörschwelle eines Menschen, typischerweise oberhalb von 20 kHz.

Die vorgenannte Ausführungsform erzielt durch den Betrieb als Konstantstromquelle eine weitestgehende Unabhängigkeit des erzeugten Drehmoments von Schwankungen der Versorgungsspannung und von Temperaturtriften des Motors.

Jedoch findet diese Ausführungsform vor allem Anwendung bei netzbetriebenen Geräten, bei denen das störende 50 bzw. 100 Hz-Brummen des Netzteils vom haptischen Feed-back gekoppelt werden muß. Der Mensch ist nämlich in der Lage, Schwingungen bis etwa 500 Hz mit seinen Fingerkuppen wahrzunehmen.

Zur Sicherstellung der Erzeugung eines gewünschten Drehmomentes ist es bei einer anderen Variante bekannt, den Strom durch den Motor zu erfassen und die Pulsweitenansteuerung des Motors entsprechend der Abweichung zwischen Istand Sollwerten nachzuführen.

Die oben angegebene erste Ausführungsform der Konstantstromquelle hat den Nachteil, dass über die Ansteuerung der Brücke eine Verlustleistung entsteht. Da beispielsweise im Fahrzeugbereich Schwankungen der Versorgungsspannung in der Größenordnung zwischen 9 und 16 V auftreten, würde eine entsprechende Dimensionierung für einen Motor, der etwa mit 2 A sein maximales Drehmoment abgibt, eine Verlustleistung von etwa 14 Watt bedeuten. Eine solche Verlustleistung kann im Fahrzeugbereich nur mit sehr aufwendigen Kühlkörpern abgeführt werden. Außerdem ist die Wärmeabführung kostenintensiv und der Anfall von Verlustleistung verbrauchsunfreundlich. Im übrigen wird die über die Verlustleistung erzeugte Wärme als irritierend empfunden. Bei netzbetriebenen Geräten hingegen ist diese Verlustleistung weniger störend, da dort die Versorgungsspannung weit weniger stark schwankt.

Die zweite oben beschriebene Lösung hat den Nachteil, dass ein zusätzlicher Schaltungsaufwand notwendig wird. Zudem muß ein Regelkreis mit einer Rückführung aufgebaut werden, welcher hinsichtlich seiner Neigung zu Schwingungen ungünstig ist.

Die US 5,786,679 A betrifft ein "power steering system", das einen Gleichstrommotor aufweist, der zur Unterstützung des Fahrers beim Lenkvorgang ein Drehmoment erzeugt. Hierbei sei es notwendig den Rotationszustand des Gleichspannungsmotors mittels einer "feedback loop" zu detektieren, um ein optimales Drehmoment zum Unterstützen des Lenkvorgangs zu erzeugen. Um eine hohe Zuverlässigkeit bei der Detektion des Rotationszustands des Gleichspannungsmotors zu erreichen, wird die Verwendung eines "bridge commutation circuit" vorgeschlagen (vergleiche Abstract sowie Spalte 1, Zeilen 1 bis 24).

Aus der DE 39 09 042 A1 ist eine elektrische Schaltungsanordnung mit einem elektromagnetisch arbeitenden Stellglied bekannt. Zur Erzielung hoher Leistungsdaten unabhängig von der Größe der Versorgungsspannung, für den Fall klemmender oder schwergängiger Stellorgane, ist vorgesehen das Stellglied von einem Tastbetrieb einer Versorgungsspannung vornehmenden Ansteuerschaltung zu betreiben, die bei steigender Versorgungsspannung den Stellglied-Tastgrad verkleinert.

Aus der DE 196 30 036 A1 ist ein Steuerschalter zur Steuerung der Stromversorgung für eine Last bekannt. Falls die Temperatur des Steuerschalters einen Grenzwert überschreitet, ist vorgesehen, die Steuerlogik von einer hohen Taktfrequenz auf eine niedrigere Taktfrequenz umzuschalten. Die Wärmeentwicklung des Steuerschalters ist bei der niedrigeren Taktfrequenz erheblich geringer, wodurch sich die Kühlreinrichtung des Steuerschalters kleiner dimensionieren lässt.

Schließlich ist aus der DE 44 44 810 A1 eine Steuerschaltung für einen Gebläseantriebsmotor eines Fahrzeugheizgeräts bekannt. Diese weist einen Spannungsteil auf, der ein für die Versorgungsspannung repräsentatives Signal liefert. Eine relativ konstante Drehzahl des Motors auch bei Spannungsschwankungen der Versorgungsspannung soll erreicht werden, indem das Signal in einen Digitalwert umgesetzt wird, der als Adresssignal für einen Tabellenspeicher dient, in welchem kompensierte Signale abgespeichert sind und zur Bildung eines PWM-Signals herangezogen werden, welches auf den Steuereingang eines im Stromkreis des Motors liegenden Halbleiterschalters gegeben wird.

Aufgabe der Erfindung ist es, eine Schaltungsanordnung zum Betrieb eines Motors, insbesondere eines permanent-erregten Gleichstrommotors anzugeben, bei der auch bei relativ großen Schwankungen der Versorgungsspannung eine minimale Verlustleistung unter Sicherstellung der Erzeugung eines gewünschten Drehmomentes gewährleistet werden kann.

Diese Aufgabe wird durch die im Anspruch 1 angegebenen Merkmale gelöst.

Demgemäß ist eine Steuereinrichtung vorgesehen, die einen Eingang aufweist, an dem die Versorgungsspannung U_{B} des Motors oder ein diese Versorgungsspannung U_{B} beschreibendes Signal anliegt. Ferner ist die Steuereinrichtung ausgebildet, dass die Beaufschlagung des zumindest einen Schaltelements in Abhängigkeit von der Versorgungsspannung U_{B} korrigierbar ist. Durch die Steuerung des den Motor beaufschlagenden Schaltelements in Abhängigkeit von der Versorgungsspannung können aufgrund von Versorgungsspannungsschwankungen auftretende Drehmomentsschwankungen beim Motors kompensiert werden.

Insbesondere kann eine Pulsweitenmodulationsansteuerung verwendet werden, die in Abhängigkeit von der Versorgungsspannung aufgrund einer Motorkennlinie, welche das Ausmaß einer notwendigen Nachsteuerung in Abhängigkeit von der Versorgungsspannungsschwankung angibt, nachgesteuert wird.

Insgesamt läßt sich mit der vorliegenden Erfindung eine weitgehende Unabhängigkeit des Drehmoments von der Versorgungsspannung erreichen, ohne dass es zu einer übermäßigen Verlustleistung kommt. Werden Transistoren als Schaltelemente verwendet, so werden sie nur voll durchgeschaltet oder sperrend und nicht im Linearbetrieb verwendet. Damit kann die Verlustleistung gering gehalten werden. Natürlich können anstelle von Halbleitern als Schaltelemente auch andere schnell schaltende Schalter verwendet und entsprechend angesteuert werden.

Bei der Verwendung einer Pulsweitenmodulation als Ansteuerung wird eine Frequenz von vorzugsweise über 20 kHz verwendet.

Wenn ein Motor bewegt wird, erzeugt er in Abhängigkeit von der Drehgeschwindigkeit einen Strom bzw. eine induzierte Spannung. Dies wirkt entweder unterstützend oder entgegen einem externen Motoreinfluss. Um diesen Effekt zu beseitigen, wird eine erfaßte Drehgeschwindigkeit eines Motors dazu verwendet, die Drehmomentstärke unabhängig von der Drehgeschwindigkeit zu realisieren. Dazu ist bei einer vorzugsweisen Ausführungsform bei der Steuereinrichtung ein zusätzlicher Eingang vorgesehen, an dem ein Signal anliegt, welches die Drehgeschwindigkeit des Motors beschreibt. Die Steuereinrichtung ist dann derart ausgebildet ist, dass die Beaufschlagung des zumindest einen Schaltelements in Abhängigkeit von der Drehgeschwindigkeit korrigierbar ist.

Gemäß einer weiteren Ausführungsform der Erfindung weist die Steuereinrichtung einen weiteren Eingang auf, an dem ein Temperatursignal anliegt. Die Steuereinrichtung ist dann derart ausgebildet, dass die Beaufschlagung des zumindest einen Schaltelements auch in Abhängigkeit von der auf den Motor einwirkenden Umgebungstemperatur korrigierbar ist. Damit kann die Temperaturabhängigkeit des Motors, die in erster Linie durch die an sich bekannte Temperaturabhängigkeit der Kupferwicklungen bedingt ist, kompensiert werden. Die Temperatur in einem Fahrzeug ist üblicherweise aus der Klimaanlagenanordnung bekannt und kann über Bussysteme an die Steuerung des Bedienelements übertragen und dort im Steuergerät mitberücksichtigt werden.

Um auch die Selbsterwärmung des Motor aufgrund des ihn durchfließenden Stromes zu berücksichtigen, ist gemäß einer weiteren Ausführungsform ein zusätzlicher Eingang an der Steuereinrichtung vorgesehen, über den ein den mittleren Strom in einem bestimmten Zeitfenster beschreibendes Signal zugeführt wird. Die Steuereinrichtung ist dann derart ausgebildet, dass die Beaufschlagung des zumindest einen Schaltelements auch in Abhängigkeit von diesem mittleren Strom korrigierbar ist.

Eine besonders einfache Ausführungsform ist dadurch gekennzeichnet, dass als Schaltelement vier Transistoren vorgesehen sind, die nach Art einer H-Brücke mit dem Motor verschalten sind. Gemäß einer besonderen Ausführungsform ist jedem Transistor eine Diode als Freilaufdiode parallelgeschaltet.

Weitere Vorteile und Merkmale sind aus den Unteransprüchen bekannt.

Eine besonders einfache Ausführungsform der Erfindung wird anhand der einzigen beiliegenden Zeichnung näher erläutert.

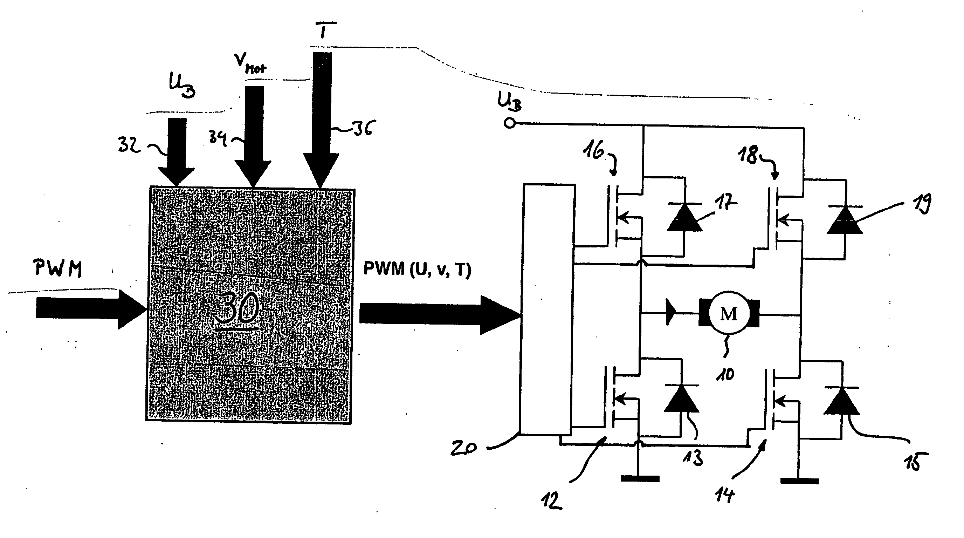

Die Zeichnung zeigt eine schematische Darstellung einer erfindungsgemäßen Schaltanordnung, bei der ein permanent-erregter Gleichstrom-Motor 10 über eine H-Brücke mit einer Spannungsversorgung U_{B} verbunden ist. Dabei wird ein Ende einer Ankerspule des Motors 10 über einen Transistor 12 mit Masse und über einen Transistor 16 mit der Versorgungsspannung U_{B} verbunden. Ferner wird das andere Ende der Ankerspule über einen Transistor 14 wiederum mit Masse und über einen Transistor 18 wiederum mit der Versorgungsspannung U_{B} verbunden. Alle Transistoren haben Freilaufdioden 13, 15, 17 und 19 parallelgeschaltet. Die Transistoren 12, 14, 16 und 18 werden von einer Logik 20 angesteuert, welche von einer Steuereinrichtung 30 korrigierte pulsweitenmodulierte Signale PWM (U, v, T) erhält und in Transistorschaltsignale umsetzt.

Die Steuereinrichtung 30 selbst erhält vorliegend bereits PWM-Signale, welche einem definierten haptischen Feed-back zwischen 0 und 100 % des Motors 10 entsprechen und verändern diese pulsweitenmodulierten Signale aufgrund der an den Eingängen 32, 34 und 36 anliegenden Signale.

Am Eingang 32 liegt ein Versorgungsspannungssignal an, welches die am Motor 10 anliegende Versorgungsspannung U_{B} darstellt. Am Eingang 34 liegt ein Signal an, welches die Verstellgeschwindigkeit des Motors v_{Mot} beschreibt und von einem Mikroprozessor geliefert wird. Am Eingang 36 liegt ein Temperatursignal T an, welches die Temperatur in der Nähe des Motors 10 wiedergibt. Im vorliegenden Fall ist die Schaltungsanordnung in einem Fahrzeug verbaut, in dem die Versorgungsspannung U_{B} sich zwischen 9 und 16 Volt bewegt. Die Steuereinrichtung 30 ist so ausgebildet, dass das in die Steuereinrichtung 30 eingehende Pulsweitenmodulationssignal in Abhängigkeit von der Versorgungsspannung U_{B} der Verstellgeschwindigkeit des Motors v_{Mot} und der Temperatur derart verändert wird, dass jeweils ein konstantes Drehmoment am Motor 10 auch bei sich verändernden Bedingungen vorliegt. Insbesondere ist dazu eine Motorkennlinie des Motors 10, die Nachregelungen in Abhängigkeit von Versorgungsschwankungswerten beinhaltet, in der Steuereinrichtung 30 abgelegt. Aufgrund dieser Daten wird die Pulsweitenmodulations-Ansteuerung in Abhängigkeit von der Versorgungsspannung U_{B} verändert.

In gleicher Weise werden in der Steuereinrichtung 30 die Effekte der Drehgeschwindigkeit des Motors 10 v_{Mot} sowie der Temperatur am Motor 10 berücksichtigt. Dies kann ebenfalls über Kennlinien erfolgen, in denen enthalten ist, inwiefern die Pulsweitenmodulation verändert werden muß, damit die über die induzierte Spannung bzw. die Temperatureffekte bedingten Auswirkungen kompensiert werden.

Die Steuereinrichtung gibt insofern ein korrigiertes Pulsweitenmodulations-Signal PWM (U, vT) an die Logik 20 ab, so dass der Motor spannungs- und temperaturunabhängig sowie drehgeschwindigkeitsunabhängig betrieben werden kann.

Eine in dem Ausführungsbeispiel nicht dargestellte Weiterbildung wäre darin zu finden, wenn auch die Erwärmung der Ankerspule aufgrund des diese durchflieβenden Stromes bei der Steuerung des Motors eine Berücksichtigung findet. Dazu kann entweder extern oder in der Steuereinrichtung 30 der mittlere den Motor 10 durchfließende Strom in einem bestimmten Zeitfenster ermittelt werden. Über diesen mittleren Strom kann auf die Spulenerwärmung und damit auf die notwendige Korrektur bei der Pulsweitenmodulation geschlossen werden. Um diese Variante zu realisieren müsste die Steuereinrichtung 30 noch einen entsprechenden Eingang aufweisen und zur entsprechenden Verarbeitung ausgebildet sein.

Die vorgeschlagene Lösung erzeugt eine minimale Verlustleistung und ist insbesondere für den Automobilbereich eine geeignete Lösung für die gestellte Aufgabe. Außerdem kann diese Lösung mit am Markt üblichen Standard-Halbleiterbrücken mit integriertem Übertemperaturschutz realisiert werden. Die Schaltung kommt daher ohne zusätzliche Bauteile aus, da die Versorgungsspannung bereits für andere Zwecke, wie z. B. für die Diagnose im Kraftfahrzeug erfaßt wird. Darüber hinaus sind keine Nachteile bezüglich der Stabilität zu erwarten, da es sich hierbei um eine Steuerung handelt. Dagegen wären schnelle Regelungen im Automobilbereich aufgrund des breiten Anforderungsprofiles bezüglich ihren Störungen nur schwer beherrschbar.

## Patentansprüche

1. Schaltungsanordnung zum Betrieb eines Motors,
- bei dem zumindest ein Schaltelement (12, 14, 16, 18) den Motor (10) mit einer Gleichstrom-Spannungsversorgung U_{B} verbindet,
- eine Steuereinrichtung (30) vorgesehen ist, die das zumindest eine Schaltelement (12, 14, 16, 18) in vorgegebener Weise derart beaufschlagt, dass der Motor (10) ein definiertes Drehmoment erzeugt,
- die Steuereinrichtung (30) einen Eingang (32) aufweist, an dem die Versorgungsspannung U_{B} des Motors (10) angelegt oder der mit einem diese Versorgungsspannung U_{B} beschreibenden Signal beaufschlagt ist und derart ausgebildet ist, dass die Beaufschlagung des zumindest einen Schaltelements (12, 14, 16, 18) in Abhängigkeit von der Versorgungsspannung U_{B} korrigiert ist,
- die Steuereinrichtung (30) zusätzlich einen Eingang (34) aufweist, an dem ein Signal angelegt ist, welches die Drehgeschwindigkeit des Motors (10) beschreibt und derart ausgebildet ist, dass die Beaufschlagung des zumindest einen Schaltelements (12, 14, 16, 18) in Abhängigkeit von der Drehgeschwindigkeit korrigiert ist,
**dadurch gekennzeichnet, daß**
die Steuereinrichtung (30) einen weiteren Eingang (36) aufweist, an dem ein Signal angelegt ist, welches die Umgebungstemperatur des Motors (10) beschreibt und derart ausgebildet ist, dass die Beaufschlagung des zumindest einen Schaltelements (12, 14, 16, 18) in Abhängigkeit von der Umgebungstemperatur korrigiert ist.

2. Schaltungsanordnung nach Anspruch 1,
**dadurch gekennzeichnet,**
**dass** eine auf den Motor (10) abgestimmte und von der Versorgungsspannung U_{B} abhängige Kennlinie vorgesehen ist und ein Signal für das zumindest eine Schaltelement (12, 14, 16, 18) anhand einer Kennlinie des Motors (10) nachgesteuert ist.

3. Schaltungsanordnung nach einem der Ansprüche 1 oder 2,
**dadurch gekennzeichnet,**
**dass** eine Einrichtung zur Ermittlung eines mittleren Stromes durch den Motor (10) innerhalb eines bestimmten Zeitfensters vorgesehen und eine Korrektur für die Beaufschlagung des zumindest einen Schaltelements (12, 14,1 6, 18) aufgrund diesen mittleren Stromes vorgenommen ist.

4. Schaltungsanordnung nach einem der vorhergehenden Ansprüche,
**dadurch gekennzeichnet,**
**dass** als Schaltelemente vier Transistoren (12, 14, 16, 18) vorgesehen sind, die nach Art einer H-Brücke mit dem Motor (10) verschaltet sind.

5. Schaltungsanordnung nach Anspruch 4,
**dadurch gekennzeichnet,**
**dass** zu jedem Transistor (12, 14, 16, 18) eine Diode (13, 15, 17, 19) als FreilaufDiode parallelgeschaltet ist.

6. Schaltungsanordnung nach einem der vorhergehenden Ansprüche,
**dadurch gekennzeichnet,**
**dass** die Steuereinrichtung (30) zur Ansteuerung der Schaltelemente (12, 14, 16, 18) mittels einer Pulsweitenmodulation ausgebildet ist (PWM-Ansteuerung).

7. Schaltungsanordnung nach Anspruch 6,
**dadurch gekennzeichnet,**
**dass** die Frequenz der Ansteuerung über 15 kHz liegt.

8. Schaltungsanordnung nach einem der vorhergehenden Ansprüche,
**dadurch gekennzeichnet,**
**dass** das zumindest eine Schaltelement (12, 14, 16, 18) einen permanenterregten Gleichstrommotor (10) mit der Gleichstrom-Spannungsversorgung U_{B} verbindet.

## Claims

1. A circuit arrangement for operating a motor,
- in which at least one switching arrangement (12, 14, 16, 18) connects the motor (10) to a direct current voltage supply U_{B},
- a control device (30) is provided, which acts on the at least one switching element (12, 14, 16, 18) in a predetermined manner in such a way that the motor (10) produces a defined torque,
- the control device (30) has an input (32), at which the supply voltage U_{B} of the motor (10) is applied or which receives a signal describing this supply voltage U_{B} and is configured in such a way that the action on the at least one switching element (12, 14, 16, 18) is corrected depending on the supply voltage U_{B},
- the control device (30) additionally has an input (34), at which a signal is applied, which describes the rotational speed of the motor (10) and is configured in such a way that the action on the at least one switching element (12, 14, 16, 18) is corrected depending on the rotational speed,
**characterised in that** the control device (30) has a further input (36), at which a signal is applied, which describes the ambient temperature of the motor (10) and is configured in such a way that the action on the at least one switching element (12, 14, 16, 18) is corrected depending on the ambient temperature.

2. A circuit arrangement according to claim 1, **characterised in that** a characteristic matched to the motor (10) and dependent on the supply voltage U_{B} is provided and a signal for the at least one switching element (12, 14, 16, 18) is readjusted with the aid of a characteristic of the motor (10).

3. A circuit arrangement according to either of claims 1 or 2, **characterised in that** a device for determining an average current through the motor (10) within a specific time window is provided and a correction for the action on the at least one switching element (12, 14, 16, 18) is carried out on the basis of this average current.

4. A circuit arrangement according to any one of the preceding claims, **characterised in that** four transistors (12, 14, 16, 18), which are connected in the manner of an H-bridge to the motor (10), are provided as switching elements.

5. A circuit arrangement according to claim 4, **characterised in that** a diode (13, 15, 17, 19) is connected in parallel as a freewheeling diode with respect to each transistor (12, 14, 16, 18).

6. A circuit arrangement according to any one of the preceding claims, **characterised in that** the control device (30) is configured to activate the switching elements (12, 14, 16, 18) by means of a pulse width modulation (PWM activation).

7. A circuit arrangement according to claim 6, **characterised in that** the frequency of the activation is above 15 kHz.

8. A circuit arrangement according to any one of the preceding claims, **characterised in that** the at least one switching element (12, 14, 16, 18) connects a permanently excited direct current motor (10) to the direct current voltage supply U_{B}.

## Revendications

1. °) Circuit de gestion d'un moteur dans lequel :
- au moins un élément de commutation (12, 14, 16, 18) relie le moteur (10) à une tension d'alimentation de courant continu U_{B},
- une installation de commande (30) sollicite au moins un élément de commutation (12, 14, 16, 18) de manière prédéterminée pour que le moteur (10) fournisse un couple défini,
- installation de commande (30) comporte une entrée (32) recevant la tension d'alimentation U_{B} du moteur (10) ou un signal décrivant cette tension d'alimentation U_{B} et corrige la mise en oeuvre d'au moins un élément de commutation (12, 14, 16, 18) en fonction de la tension de l'alimentation U_{B},
- l'installation de commande (30) comporte en plus une entrée (34) recevant un signal décrivant la vitesse de rotation du moteur (10) et corrigeant la mise en oeuvre d'au moins un élément de commutation (12, 14, 16, 18) en fonction de cette vitesse de rotation,
circuit **caractérisé en ce que**
l'installation de commande (30) comporte une autre entrée (36) recevant un signal décrivant la température ambiante du moteur (10) et corrigeant la mise en oeuvre d'au moins un élément de commutation (12, 14, 16, 18) en fonction de cette température ambiante.

2. °) Circuit selon la revendication 1,
**caractérisé par** une
courbe caractéristique définie en fonction du moteur (10) et de la tension d'alimentation U_{B} et un signal appliqué à au moins l'un des éléments de commutation (12, 14, 16, 18) est commandé en fonction de la courbe caractéristique du moteur (10).

3. °) Circuit selon l'une des revendications 1 ou 2,
**caractérisé par**
une installation pour déterminer l'intensité moyenne du courant dans le moteur (10) à dans une certaine fenêtre de temps et corrigeant la mise en oeuvre d'au moins un élément de commutation (12, 14, 16, 18) en fonction de cette intensité moyenne.

4. °) Circuit selon l'une quelconque des revendications précédentes,
**caractérisé en ce que**
les éléments de commutation sont quatre transistors (12, 14, 16, 18) montés en pont H relié au moteur (10).

5. °) Circuit selon la revendication 4,
**caractérisé en ce qu'**
une diode (13, 15, 17, 19) fonctionnant comme diode de roue libre est branchée en parallèle sur chaque transistor (12, 14, 16, 18).

6. °) Circuit selon l'une des revendications précédentes,
**caractérisé en ce que**
l'installation de commande (30) assure la commande des éléments de commutation (12, 14, 16, 18) par une modulation de largeur d'impulsion (commande PWM).

7. °) Circuit selon la revendication 6,
**caractérisé en ce que**
la fréquence de la commande est supérieure à 15 kHz.

8. °) Circuit selon l'une des revendications précédentes,
**caractérisé en ce qu'**
au moins un élément de commutation (12, 14, 16, 18) relie un moteur à courant continu (10) à excitation par aimant permanant à la tension d'alimentation en courant continu U_{B}.
